# EUROPEAN PATENT APPLICATION

(11) **EP 2 752 564 A1**
(43) Date of publication of application: **09.07.2014**
(21) Application number: 13150525.7
(22) Date of filing: 08.01.2013
(51) Int. Cl.: F02B 23/06

(54) **Piston**

(71) Applicant: Perkins Engines Company Limited, Peterborough Cambridgeshire PE1 5NA (GB)
(72) Inventor: Page, Vivian, BOURNE, Lincolnshire PE10 95Q (GB)
(74) Representative: Modiano, Micaela Nadia

(57) **Abstract**

A piston combustion bowl (20) for a diesel engine is described. The piston (10) may decrease the production of particulate matter during combustion of the fuel vapour in the combustion chamber (11). The piston (10) may comprise a body (12) having a crown (14) about a central axis (P); a combustion chamber (11) transversely disposed in the body (12) and recessed from the crown (14); a centre pip (22) disposed in the combustion chamber (11) about the central axis (P); a bowl (20) extending from the centre pip (22) to a lip (18) inclined relative to the crown (14) at an angle; and a wall (16) connected between the lip (18) and the crown (14) for limiting angular distribution of fuel vapour exiting the combustion chamber (11).

## Description

### Technical Field

This disclosure relates generally to pistons for internal combustion engines, and particularly to pistons for diesel engines. More particularly, the disclosure relates to a combustion bowl defined in a crown of a piston.

### Background

Combustion of fuel in the combustion chambers of engine pistons may produce particulate matter, such as soot, and NOx emissions. There are on-going concerns for production of sufficient engine power while minimising the NOx emissions in exhaust gases and minimising the amount of particulate matter retained in the combustion chamber and released through exhaust gases. Exhaust gas after-treatment devices including catalyst and particulate filters have been generally adopted to reduce NOx and particulate matter emissions in exhaust gases.

Particulate matter and NOx emissions may be dependent on factors relating to engine design and operation. These factors may include engine compression ratio, combustion chamber structure and fuel injection spray pattern. These factors may be exploited to reduce further the level of NOx and particulate matter emissions.

The effect of the distribution and flow of the air and fuel mixture on particulate matter and NOx emissions may be determined by the structure of the combustion chamber.

US2007199538 discloses a combustion chamber for a direct-injection diesel engine, wherein mixture of air and fuel may be optimally promoted by the combustion chamber thereby effecting a balance between particulate matter reduction and NOx reduction. The combustion chamber may be formed at a top of a piston and may be symmetrical about a centre axis. The combustion chamber may have its end that is formed into a substantially polygonal shape in combination with round portions and straight portions. The reduction in particulate matter and NOx may be achieved by improving a retardation limit with respect to fuel injection timing and speeding up combustion at a high exhaust gas recirculation.

The present disclosure is directed, at least in part, to improving or overcoming one or more aspects of the prior art system.

### Brief Summary of the Invention

The present disclosure describes a piston for a diesel engine, the piston comprising: a body having a crown about a central axis; a combustion chamber transversely disposed in the body and recessed from the crown; a centre pip disposed in the combustion chamber about the central axis; a lip inclined relative to the crown at an angle; a bowl extending from the centre pip to the lip; and a wall connected between the lip and the crown for limiting angular distribution of fuel vapour exiting the combustion chamber.

### Brief Description of the Drawings

The foregoing and other features and advantages of the present disclosure will be more fully understood from the following description of various embodiments, when read together with the accompanying drawings, in which:
Fig. 1 is a sectional view of a piston according to the present disclosure;
Fig. 2 is a sectional view of a combustion chamber disposed in the piston of Fig. 1;
Fig. 3a is a partial sectional view of the combustion chamber of Fig. 2;
Fig. 3b is a close up sectional view of a part of the combustion chamber of Fig. 3a.
Fig. 4 is a plan view of the combustion chamber of Fig. 2; and
Fig. 5 is a close up sectional view of a part of the combustion chamber with indication of the path of the fuel vapour and combustion products.

### Detailed Description

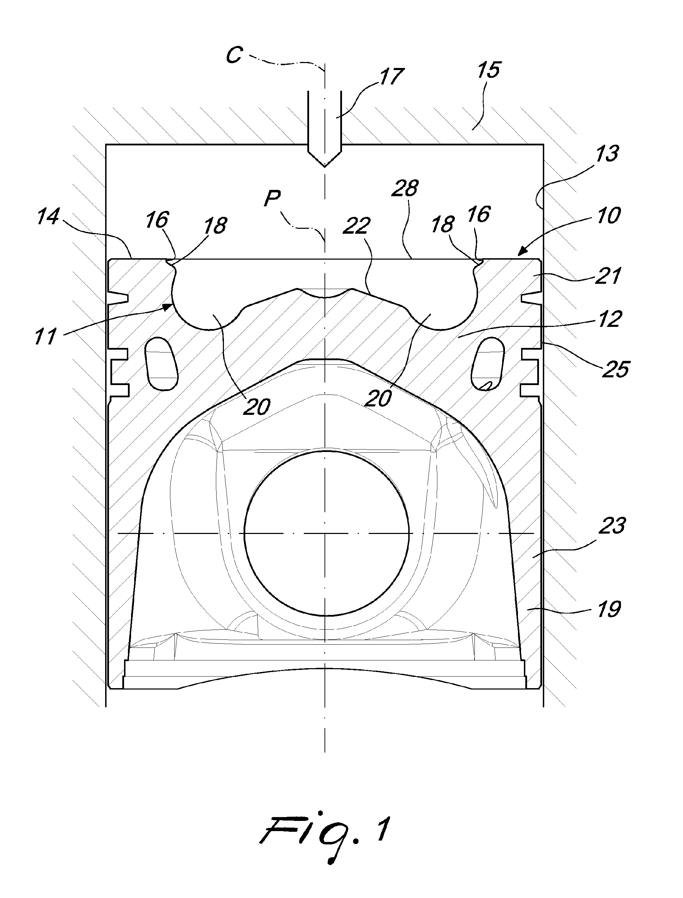

Fig. 1 illustrates a sectional view of a piston **10** for a diesel engine. The piston **10** may be slidably assembled into a cylinder **13** within a cylinder block **9** Piston **10** may have a central axis **P.** The cylinder **13** may have a cylinder head **15.** The walls of the cylinder **13** may be provided with a cylinder liner (not shown). A fuel injector **17** may be positioned in the cylinder head **15.** The fuel injector **17** may have a plurality of nozzles configured to inject fuel into the cylinder **13.**

Cylinder **13** may have a longitudinal axis **C.** With the piston **10** assembled into the cylinder **13** the central axis **P** of the piston **10** may be aligned with the longitudinal axis **C** of the cylinder **13.**

The fuel injector **17** may be configured to inject fuel at a spray angle (not shown). The spray angle may be defined as the angle between the piston central axis **P** and a nozzle in the fuel injector **17.** The spray angle may determine the spray coverage within the piston **10.**

Piston **10** may have a body **12.** The body **12** may have a first end portion **21** and a second end portion **23.** The body **12** may be delimited by an outer surface **25** extending from the first end portion **21** to the second end portion **23.** Piston **10** may have a piston skirt **19** at the second end portion **23.**

Body **12** may have a crown **14.** Crown **14** may be substantially flat. Crown **14** may be disposed about a central axis **P.** Crown **14** may be symmetrical about the central axis **P.** Crown **14** may be disposed at the first end portion **21.** Crown **14** may extend from the outer surface **25** towards the central axis **P.** Crown **14** may extend in a substantially transverse direction relative to the central axis **P.** Crown **14** may be perpendicular to the outer surface **25.**

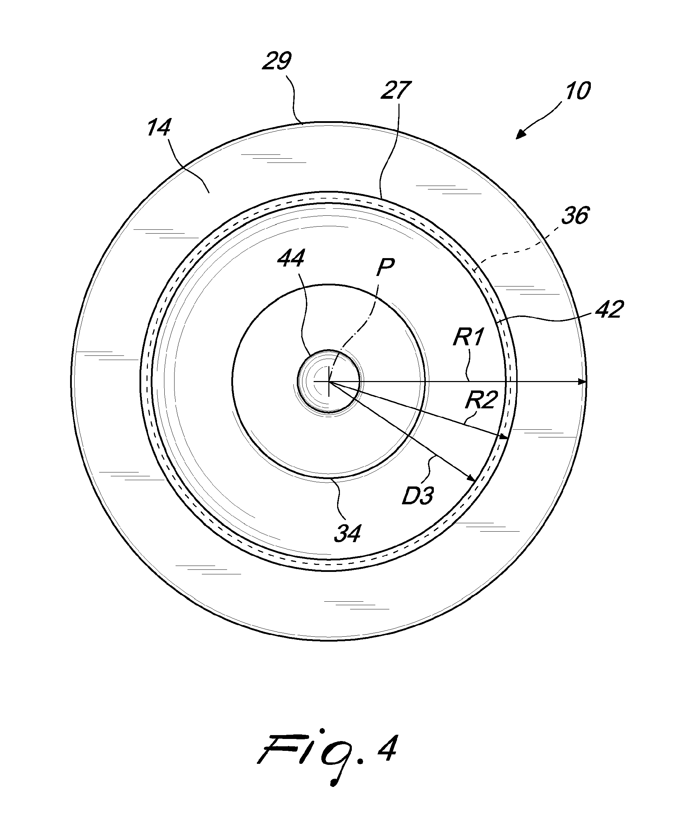

Fig. 4 illustrates a plan view of the piston **10.** Crown **14** may be an annular ring having an inner radius **R2** and an outer radius **R1.** The inner radius **R2** may be measured from the central axis **P** to an inner edge **27** of the crown **14.** The outer radius **R1** of the crown **14** may be measured from an outer edge **29** to the central axis **P.** The outer edge **29** may be formed on the outer surface **25.** Inner radius **R2** may have a length of 37.25mm.

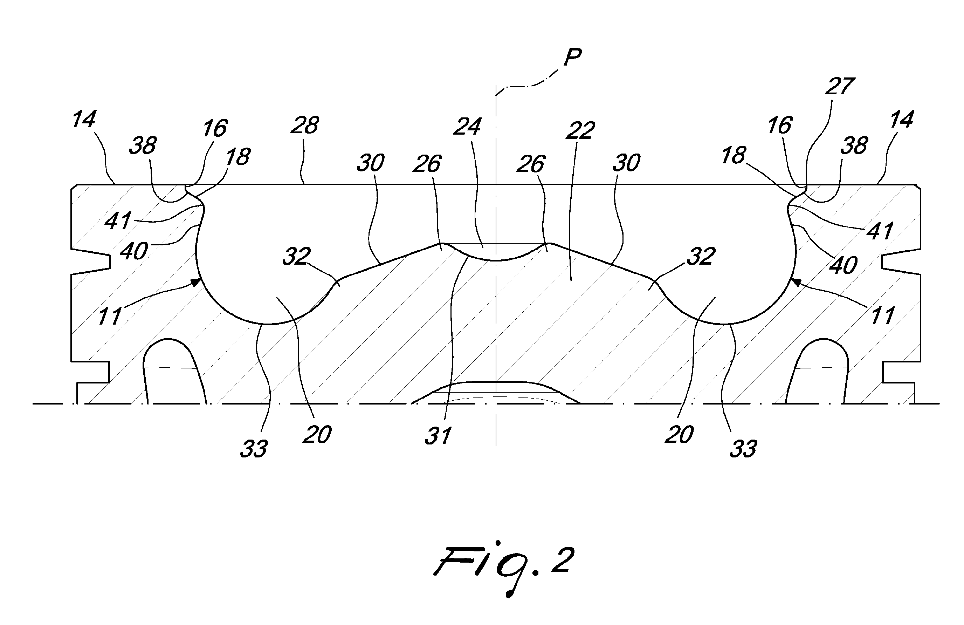

Fig. 2 illustrates a section of the combustion chamber **11.** Piston **10** may have a combustion chamber **11.** The combustion chamber **11** may be transversely disposed in the body **12.** Combustion chamber **11** may be recessed into body **12** at the first end portion **21.** Combustion chamber **11** may be recessed from the crown **14.** Combustion chamber **11** may be symmetrical about the central axis **P.** Combustion chamber **11** may be disposed at the first end portion **21.**

Combustion chamber **11** may have an opening **28** at the first end portion **21.** Opening **28** may be delimited by the inner edge **27** of the crown **14.** Opening **28** may have a radius equivalent to the inner radius **R2** of the crown. Opening **28** may have a radius with a length of 37.25mm. Opening **28** may be in alignment with the crown **14.** Opening **28** may be level with the crown **14.**

Within the cylinder **13,** the piston **10** may be positioned so that the fuel injector **17** may inject fuel substantially into the combustion chamber **11.** The fuel vapour injected into the combustion chamber **11** may be mixed with intake air which is then burnt in the combustion chamber **11.** The combustion chamber **11** may be configured to receive injection of fuel vapour at a spray angle of approximately 67.50 to 700 relative to the central axis **P.**

With reference to Fig. 2, piston **10** may have a centre pip **22.** Centre pip **22** may be disposed in the combustion chamber **11.** Centre pip **22** may project from the combustion chamber **11** in a direction towards the opening **28.** Centre pip **22** may be a convex projection. Centre pip **22** may form a central portion of the floor of the combustion chamber **11.** Centre pip **22** may be disposed about the central axis **P.** Centre pip **22** may be symmetrical about the central axis **P.** Centre pip **22** may be annular. Centre pip **22** may be at least partially conical or domed.

Centre pip **22** may have a recess **24.** Recess **24** may face opening **28.** Recess **24** may be delimited by a recess floor **31.** The recess floor **31** may be a partial spherical surface. Recess floor **31** may be a concave arc in cross section. Recess floor **31** may be a circular concave arc in cross section.

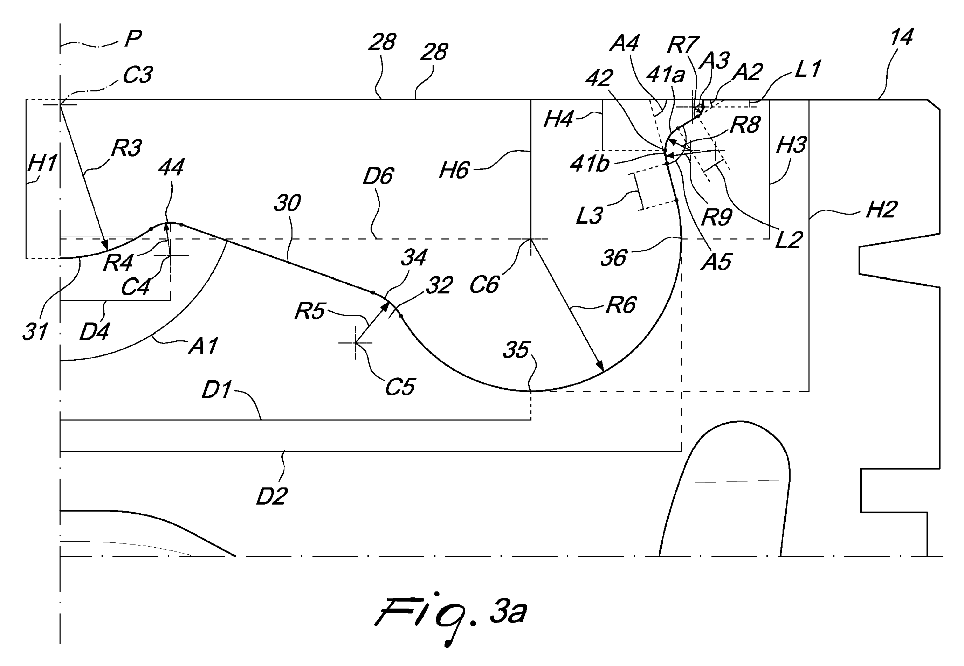

With reference to Fig. 3a, recess floor **31** may have a maximum recess depth **H1**. The maximum recess depth **H1** may be coincident with the central axis **P.** The maximum recess depth **H1** may be 9.38mm from the opening **28.** The recess floor **31** may have a radius **R3** of 9.0mm. The centre **C3** from which radius **R3** is measured may be coincident on the central axis **P.**

With reference to Fig. 2, centre pip **22** may have a recess transition **26.** Recess transition **26** may be annular and concentric with the recess **24.** Recess transition **26** may have a form of an annular ring. The annular recess transition **26** may represent the opening for the recess **24.** Recess transition **26** may face the opening **28.** Recess transition **26** may have a symmetrical axis that is substantially normal relative to the opening **28.** Recess transition **26** may have a symmetrical axis that is substantially normal to the crown **14.** The recess transition **26** may be symmetrical about the central axis **P.**

In cross section, the recess transition **26** may be formed as a remote pair of convex arcs. In cross section, the recess transition **26** may be formed as remote pair of circular convex arcs. The remote pair of circular convex arcs may be separated by the recess **24.** Each circular convex arc may have a symmetrical axis that is substantially normal to the crown **14** and the opening **28.**

With reference to Figs. 3a and 4, recess transition **26** may have a recess transition apex **44.** Recess transition apex **44** may be in the form of a continuous circular peak on the recess transition **26.** The recess transition apex **44** may be the uppermost point on the centre pip **22** with respect to the opening **28.** The distance from the recess transition apex **44** to the central axis **P** may be 6.75mm.

With reference to Fig. 3a, in each section of the recess transition **26** the recess transition apex **44** may have an apex point. The distance between the centre pip **22** at the apex point and the opening **28** may be the smallest straight line distance from the centre pip **22** to the opening **28.**

The recess transition **26** may have a radius **R4** of 3.0mm. Radius **R4** may be measured from a centre **C4.** The distance **D4** from the central axis **P** to the centre **C4** may be 6.75mm. The distance **D4** from the central axis **P** to the centre **C4** of a section of the recess transition portion **26** in the form of a circular convex arc may be 6.75mm.

With reference to Fig. 2, centre pip **22** may have a floor portion **30.** Recess transition **26** may connect the recess **24** to the floor portion **30.** Floor portion **30** may be annular and concentric with the recess **24** and the recess transition **26.** The floor portion **30** may extend from the recess transition **26** away from the central axis **P.** The floor portion **30** may extend radially from the recess transition **26.** The floor portion **30** may be symmetrical about the central axis **P.**

With reference to Fig. 3a, floor portion **30** may be inclined relative to the crown **14** and the opening **28.** Floor portion **30** may be inclined away from the crown **14** and the opening **28.** Floor portion **30** may be inclined relative to the central axis **P.** Floor portion **30** may be inclined towards the central axis **P.** Floor portion **30** may be inclined relative to the central axis **P** at a floor angle **A1** of 700. The angle between the floor portion **30** and the crown **14** may be 200.

The floor portion **30** may have sloped sides. In cross section, floor portion **30** may have sloped straight sides. The remote pair of sloped straight sides may be separated by the recess **24** and the recess transition **26.**

With reference to Fig. 2, centre pip **22** may have a floor transition **32.** Floor transition **32** may be annular and concentric with floor portion **30.**

In cross section, the floor transition **32** may be formed as a remote pair of convex arcs. In cross section, the floor transition **32** may be formed as remote pair of circular convex arcs. Each circular convex arc may have a symmetrical axis that is substantially inclined to the opening **28** and the crown **14.** The remote pair of circular convex arcs may be separated by the recess **24,** the recess transition **26** and the floor portion **30.** The floor transition **32** may be symmetrical about the central axis **P.**

With reference to Figs. 3a and 4, floor transition **32** may have a floor transition apex **34.** Floor transition apex **34** may be continuous circular peak. The floor transition apex **34** may be the lowermost point on the centre pip **22** with respect to the opening **28.** In each section the floor transition apex **34** may have an apex point. The distance between the centre pip **22** at the apex point and the opening **28** may be the greatest straight line distance from the centre pip **22** to the opening **28.**

With reference to Fig. 3a, the floor transition **32** may have a radius **R5** of 3.0mm. Radius **R5** may be measured from a centre **C5.**

With reference to Fig. 1, piston **10** may have a bowl **20.** The bowl **20** may be disposed in the combustion chamber **11.** Bowl **20** may be formed as a groove projecting into the combustion chamber **11** in a direction substantially away from the opening **28.** Bowl **20** may form a portion of the floor of the combustion chamber **11.** Bowl **20** may be symmetrical about the central axis **P.**

With reference to Fig. 2, bowl **20** may be formed as a circular groove. Bowl **20** may be annular and may be concentric with the centre pip **22.** Bowl **20** may be disposed about the centre pip **22.** Bowl **20** may be connected to the centre pip **22** through the floor transition **32.** Bowl **20** may be formed as a partial torus around the centre pip **22.** Bowl **20** may extend radially out from the centre pip **22.**

Bowl **20** may be delimited by a bowl surface 33. Bowl surface **33** may form part of the floor of the combustion chamber **11** with the floor portion **30** and the recess floor **31.** Bowl surface **33** may extend towards the opening **28** and the crown **14** so as partially to form the sidewall of the combustion chamber **11.**

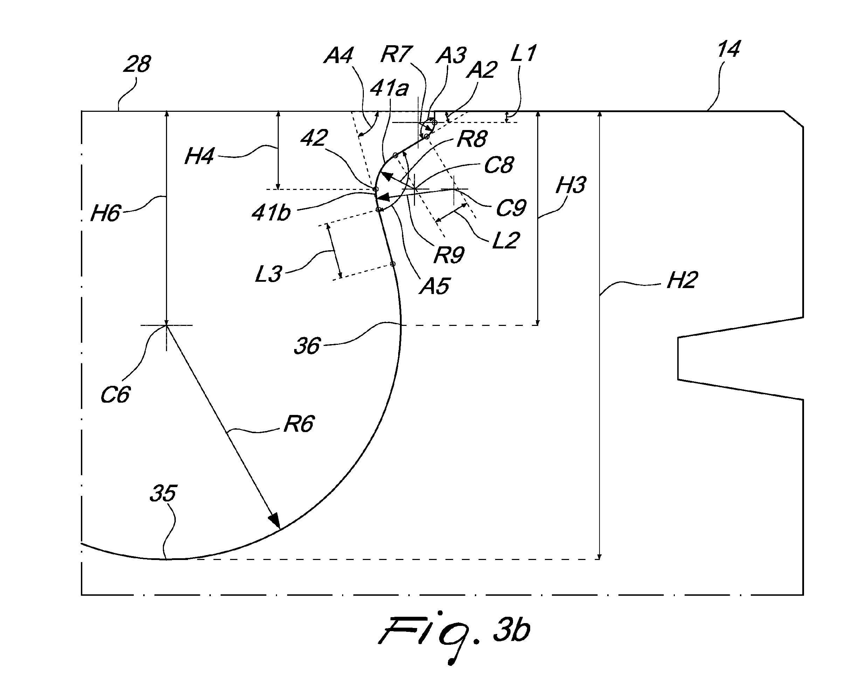

With reference to Figs. 3a and 3b, the bowl surface **33** may be a partial toroid surface. Bowl surface **33** may be a concave arc in cross section. Bowl surface **33** may be formed as a remote pair of circular concave arcs in cross section. The remote pair of circular concave arcs may be separated by the centre pip **22.**

The bowl **20** may have a radius **R6** of 9.0mm. Radius **R6** may be measured from a centre **C6.** The distance **D6** from the central axis **P** to the centre **C5** may be 26.9mm. The distance **D6** from the central axis **P** to the centre **C6** of a section of the bowl **20** in the form of a circular concave arc may be 26.9mm. The centre **C6** may have a depth **H6.** The depth **H6** may be 7.85mm from the opening **28.**

Bowl **20** may have a bowl bottom **35.** Bowl bottom **35** may be formed as a continuous circular line on the bowl **20.** The bowl bottom **35** may be the lowermost point on the bowl **20** with respect to the opening **28** and the crown **14.** Bowl bottom **35** may have a maximum bowl depth **H2** of 16.85mm from the crown **14.** The distance **D1** from the central axis **P** to the bowl bottom **35** may be 26.9mm.

Bowl **20** may have a bowl lateral limit **36.** Bowl lateral limit **36** may be formed as a continuous circular line on the bowl **20.** The bowl lateral limit **36** may be the furthermost lateral point on the bowl **20** with respect to the central axis **P.** The distance **D2** from the central axis **P** to the bowl lateral limit **36** may be 35.9mm. Bowl lateral limit **36** may have a depth **H3** of 7.85mm from the crown **14.**

With reference to Fig. 1, piston **10** may have a lip **18.** The lip **18** may be disposed in the combustion chamber **11.** Lip **18** may form a portion of the sidewall of the combustion chamber **11.** Lip **18** may be formed as an annular projection. Lip **18** may project into the combustion chamber **11.** Lip **18** may extend radially into the combustion chamber **11.** Lip **18** may be symmetrical about the central axis **P.**

With reference to Fig. 2, the lip **18** may have sloped sides. The lip **18** may have sloped straight sides. The sloped sides may be spaced apart, in cross section of the lip **18.** A first sloped straight side may face the second sloped straight side.

With reference to Figs. 3a and 3b, lip **18** may be inclined relative to the opening **28** and the crown **14.** Lip **18** may be symmetrical about the central axis **P.** Bowl **20** may extend from the centre pip **22** to the lip **18** inclined relative to the crown **14.** Lip may be inclined relative to the crown **14** at an angle **A2** of 340. The lip **18** may have a length **L2** of 1.6mm.

With reference to Fig. 1, piston **10** may have a wall **16.** Wall **16** may be connected between the lip **18** and the crown **14.** Wall **16** may limit angular distribution of fuel vapour and combustion products exiting the combustion chamber **11.** Wall **16** may be annular. Wall **16** may be concentric with lip **18** and the crown **14.** Wall **16** may form a portion of the sidewall of the combustion chamber 11. The uppermost portion of the combustion chamber **11** may be defined by the annular wall **16.** Wall **16** may be parallel to the outer surface **25** of the piston **10.** The wall **16** may have a radius of 37.25mm.

With reference to Fig. 2, in cross section the wall **16** may be formed as remote straight sides. The straight sides may be mutually parallel.

With reference to Figs. 3a and 3b, wall **16** may extend from the crown **14** and the opening **28** into the chamber **11** to connect with lip **18.** Wall **16** may be substantially perpendicular to the crown **14.** Wall **16** may be substantially perpendicular to the opening **28.** Wall **16** may have a length **L1** of 0.5mm. Lip **18** may be inclined relative to the wall **16** at an angle **A3** of 1200.

In an embodiment, with reference to Fig. 2, piston **10** may have a wall transition **38.** Wall transition **38** may connect wall **16** to the lip **18.** Wall transition **38** may be annular and concentric with wall **16** and the lip **18.**

With reference to Figs. 3a and 3b, in cross section, the wall transition **38** may be formed as a remote pair of concave arcs. In cross section, the wall transition **38** may be formed as remote pair of circular concave arcs. Each circular concave arc may have a symmetrical axis that is substantially inclined to the opening **28** and the crown **14.** The wall transition **38** may be symmetrical about the central axis **P.** The wall transition **38** may have a radius **R7** of 0.50mm.

In an embodiment, with reference to Fig. 2, piston **10** may have a re-entrant portion **40.** Re-entrant portion **40** may be connected between the lip **18** and the bowl **20.** Re-entrant portion **40** may be annular. Re-entrant portion **40** may be concentric with lip **18.** Re-entrant portion **40** may form a portion of the sidewall of the combustion chamber **11.**

Re-entrant portion **40** may extend from the bowl **20** towards the opening **28.** Re-entrant portion **40** may project into the combustion chamber **11.** Re-entrant portion **40** may extend over a portion of the bowl **20.** Re-entrant portion **40** may face the bowl **20.** In cross section the re-entrant portion **40** may be formed as remote straight sides. The straight sides may be mutually inclined.

With reference to Figs.3a and 3b, re-entrant portion **40** may be substantially inclined relative to the crown **14.** Re-entrant portion **40** may be inclined relative to the opening **28.** Re-entrant portion **40** may be inclined relative to the opening **28** or the crown **14** at a re-entrant angle **A4** of 750. The re-entrant portion **40** may have a length **L3** of 1.74mm.

In an embodiment, with reference to Fig. 2, piston **10** may have a re-entrant transition **41.** Re-entrant transition **41** may connect re-entrant portion **40** to the lip **18.** Re-entrant transition **41** may be annular and concentric with the lip **18.**

In cross section, the re-entrant transition **41** may be formed as a remote pair of convex arcs. In cross section, the re-entrant transition **41** may be formed as remote pair of circular convex arcs. Each circular convex arc may have a symmetrical axis that is substantially inclined to the opening **28** and the crown **14.** The re-entrant transition **41** may be symmetrical about the central axis **P.**

With reference to Figs. 3a and 3b, the re-entrant transition **41** may be comprised of a pair of circular arcs. The circular arcs may have different curvatures. The first arc **41a** may extend from the lip **18** to a tangent point at which the re-entrant transition **41** may touch a line parallel with the central axis **P.** The first arc **41a** of the re-entrant transition **41** may have a radius **R8** of 1.5mm. Radius **R8** may be measured from a centre **C8.** The distance from the central axis **P** to the centre **C8** may be 36.54mm. The second arc **41b** may extend from the tangent point to the re-entrant portion **40.** The second arc **41b** of the re-entrant transition **41** may have a radius **R9** of 3.0mm. Radius **R9** may be measured from a centre **C9.** The distance from the central axis **P** to the centre **C9** may be 38.04mm.

With reference to Fig. 4, re-entrant transition **41** may have a re-entrant transition apex **42.** Re-entrant transition apex **42** may be continuous circular peak extending around the combustion chamber **11.** The distance from the central axis **P** to the re-entrant transition apex **42** may be smaller than the distance from the central axis **P** to the lip **18.** The distance from the central axis **P** to the re-entrant transition apex **42** may be smaller than the distance from the central axis **P** to the re-entrant portion **40.** The distance **D3** from the central axis **P** to the re-entrant transition apex **42** may be 35.05mm. In an embodiment, the re-entrant transition apex **42** may be at the tangent point at which the re-entrant transition **41** touches a line parallel with the central axis **P.**

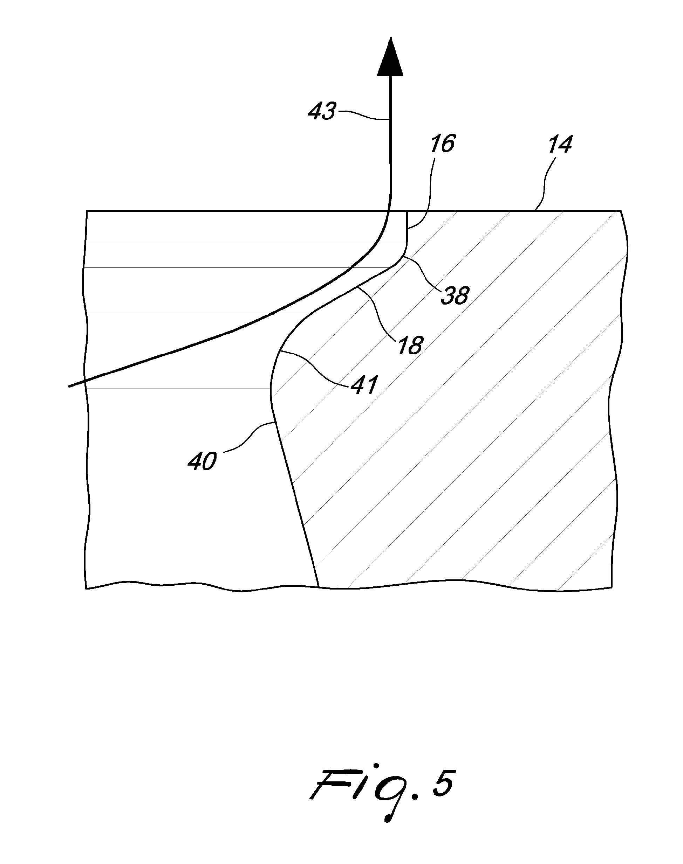

With reference to Figs. 3a and 3b, in each section the re-entrant transition apex **42** may have an apex point. The re-entrant transition apex **42** may have a depth **H4** of 3.06mm from the opening **28** or the crown **14.** The re-entrant transition **41** may have a curvature angle **A5** of 1050. The curvature angle may be formed between the lip **18** and the re-entrant portion **40.** Fig. 5 illustrates a portion of the sidewall of the combustion chamber **11.** Arrow **43** indicates the path of the fuel vapour and combustion products approaching the lip **18** and the wall **16.** Fuel vapour injected into the combustion chamber **11** may rebound from the bowl **20** and exit from the combustion chamber **11.** Fuel vapour and combustion products may rebound from the bowl surface **33.** Fuel vapour and combustion products may impact the wall **16** and the rebound path may be diverted vertically upwards towards the cylinder head **15.** Rebounding fuel vapour and combustion products may be diverted away from the wall of the cylinder **13.** The angular distribution of the rebounding fuel vapour and combustion products may be limited by the wall **16.**

The skilled person would appreciate that foregoing embodiments may be modified or combined to obtain the piston **10** of the present disclosure.

### Industrial Applicability

This disclosure describes a piston **10** for a diesel engine. The diesel engine may be a direct-injection engine. The diesel engine may be a 4 cylinder engine. The piston **10** may reduce particulate matter emission in exhaust gases by decreasing the production of particulate matter during combustion of the fuel vapour in the combustion chamber **11.** The piston **10** may have a reduced angular distribution of the fuel vapour and combustion products exiting the combustion chamber **11.** The wall **16** may limit the spread of the fuel vapour out of the combustion chamber **11** onto the walls of the cylinder **13.**

The piston **10** may have a structure that obstructs fuel vapour and combustion products that exits the combustion chamber **11** from reaching the walls of cylinder **13.** The

The fuel vapour may be injected with a cone spray angle of approximately 1350 to 1400. The fuel vapour may be injected with a cone spray angle of approximately 67.50 to 700 relative to the central axis **P.** The fuel may be injected in a direction substantially towards the bowl **20.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A piston (10) for a diesel engine, the piston (10) comprising:
a body (12) having a crown (14) about a central axis (P);
a combustion chamber (11) transversely disposed in the body (12) and recessed from the crown (14);
a centre pip (22) disposed in the combustion chamber (11) about the central axis (P);
a lip (18) inclined relative to the crown (14) at an angle (A2);
a bowl (20) extending from the centre pip (22) to the lip (18); and
a wall (16) connected between the lip (18) and the crown (14) for limiting angular distribution of fuel vapour exiting the combustion chamber (11).

2. The piston (10) of claim 1 wherein the angle (A2) is 340.

3. The piston (10) of claim 1 or claim 2 wherein the wall (16) has a length (L1) of 0.5mm.

4. The piston (10) of any one of claims 1, 2 or 3 wherein the crown (14) has an inner edge (27), the inner edge (27) defines an opening (28) having a radius (R2) of 37.25mm.

5. The piston (10) of any one of the preceding claims wherein the wall (16) is perpendicular to the crown (14).

6. The piston (10) of any one of the preceding claims further comprising a re-entrant portion (40) connecting the lip (18) and the bowl (20), wherein the re-entrant portion (40) is inclined relative to the crown (14) at a re-entrant angle (A4).

7. The piston (10) of claim 6 wherein the re-entrant angle (A4) is 750.

8. The piston (10) of claim 6 or claim 7 further comprising a re-entrant transition (41) connecting the re-entrant portion (40) to the lip (18).

9. The piston (10) of claim 8 wherein the re-entrant transition (41) has a first arc (41a) with a radius (R8) of 1.5mm and a second arc (41b) with a radius (R9) of 3.0mm.

10. The piston (10) of claim 8 or claim 9 wherein the re-entrant transition (41) has a curvature angle (A5) of 1050.

11. The piston (10) of any one of the preceding claims wherein the lip (18) has a length (L2) of 1.6mm.

12. The piston (10) of any one of the preceding claims wherein the bowl (20) has a radius (R5) of 9.0mm.

13. The piston (10) of any one of the preceding claims wherein the bowl (20) has a maximum bowl depth (H2) of 16.85mm.

14. The piston (10) of any one of the preceding claims wherein a wall transition (38) connects the wall (16) to the lip (18), the wall transition (38) having a radius (R7) of 0.5mm.

15. The piston (10) of any one of the preceding claims wherein the combustion chamber (11) is configured to receive injection of fuel vapour at a spray angle of approximately 67.50 to 700 relative to the central axis (P).
